# EUROPÄISCHE PATENTSCHRIFT

(11) **EP 3 615 831 B1**
(45) Veröffentlichungstag und Bekanntmachung des Hinweises auf die Patenterteilung: **23.03.2022**
(21) Anmeldenummer: 18719088.9
(22) Anmeldetag: 11.04.2018
(51) Int. Cl.: F16D 55/2265

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 24.04.2017 DE 102017108717
(43) Veröffentlichungstag der Anmeldung: 04.03.2020
(73) Patentinhaber: KNORR-BREMSE Systeme für Nutzfahrzeuge GmbH, 80809 München (DE)
(72) Erfinder: FISCHER, Rudolf, 85435 Erding (DE); SEIDL, Martin, 80807 München (DE)
(86) Internationale Anmeldenummer: PCT/EP2018/059315
(87) Internationale Veröffentlichungsnummer: WO 2018/197217

(56) Entgegenhaltungen:
- WO-A1-2007/023802
- WO-A1-2013/174964
- DE-A1-102012 021 690

## Beschreibung

Die Erfindung betrifft eine Scheibenbremse für ein Nutzfahrzeug nach dem Oberbegriff des Anspruchs 1.

Derartige Scheibenbremsen kbmmen insbesondere bei schweren Nutzfahrzeugen zum Einsatz. Dabei ist der auch unter der Bezeichnung Schiebesattel bekannte Bremssattel durch Befestigungselemente mit einem fahrzeugseitigen Bremsträger verbunden.

Führungsholme der Befestigungselemente sind mit dem Bremsträger, üblicherweise durch Verschrauben, verbunden, wobei die Führungsholme in Gleitlagern des Bremssattels so geführt sind, dass eine axiale Verschiebung, bezogen auf die Bremsscheibe, gegenüber dem ortsfesten Bremsträger möglich ist.

Ein Schiebeführungssystem für den Schiebesattel besteht aus einem Hauptführungslager und einem so genannten Ausgleichlager. Die Aufgabe des Schiebeführungssystems ist das Halten des Bremssattels gegen äußere Krafteinwirkung, z.B. aufgrund von Rüttelbeanspruchungen, eine exakte und möglichst spielfreie Positionierung und die Sicherstellung einer leichtgängigen Verschiebbarkeit bei Bremsbetätigungen sowie Verschleißnachstellungen.

Die Sicherstellung der Verschiebbarkeit übernimmt im Wesentlichen das Hauptführungslager, wohingegen die Aufgaben "Halten" und "Positionieren" vom Hauptführungslager und Ausgleichlager gemeinsam erfüllt werden. Während das Hauptführungslager mit engem Spiel ausgestattet ist, muss das Ausgleichlager zur Kompensation von Abstandstoleranzen sowie von betriebsbedingten Veränderungen des Lagerabstandes zumindest in Umfangsrichtung mit einem vergrößerten Spiel oder mit einer elastischen Ausgleichmöglichkeit versehen sein.

Zur bestimmungsgemäßen Funktion weist das Ausgleichlager, das im Weiteren als Loslager bezeichnet wird, eine den Führungsholm umgreifende und verschiebegesichert am Bremssattel angeschlossene Führungsbuchse mit einer elastischen Innenhülse auf, die aus einem Elastomer besteht. Die Elastizität der Innenhülse verhindert das Entstehen von Klappergeräuschen, wie sie toleranzbedingt bei spielbehafteten Ausgleichlagern auftreten können. Ein weiterer Vorteil der Elastomer-Innenhülse ergibt sich neben niedrigen Kosten aus einer hohen Robustheit sowie einer einfachen Installation.

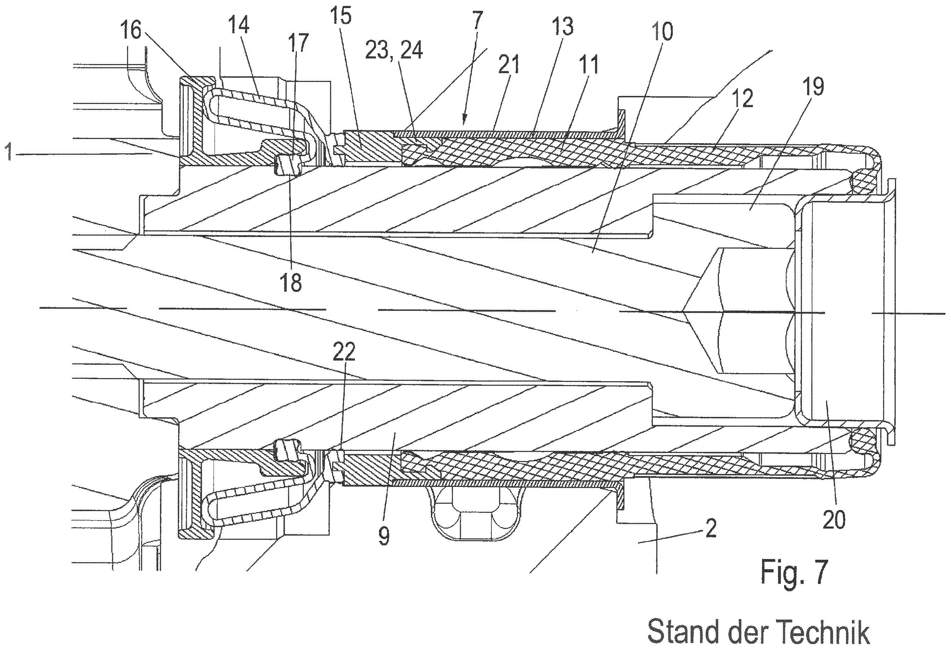

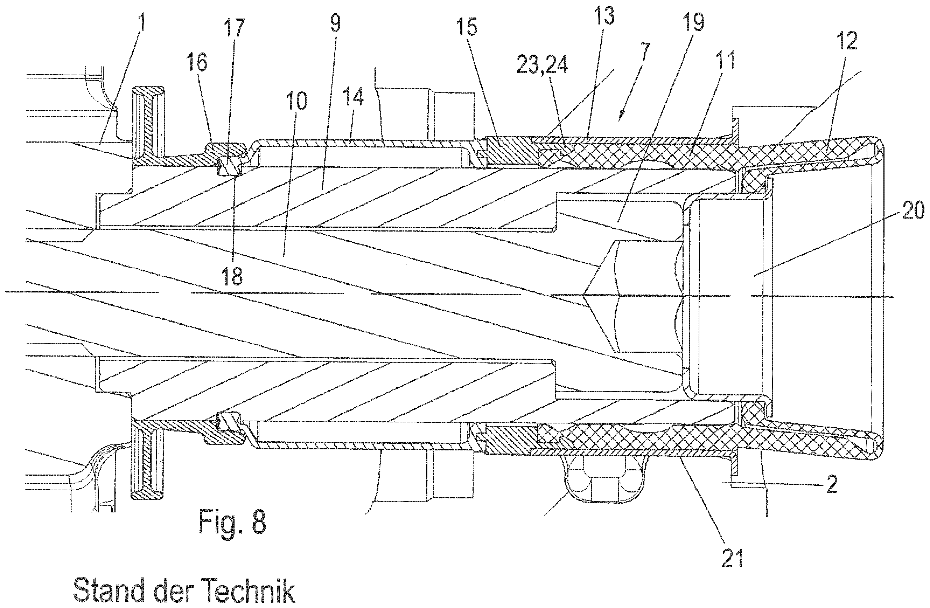

DE 10 2012 021 690 A1 beschreibt eine Scheibenbremse für ein Nutzfahrzeug, mit einem eine Bremsscheibe umfassenden Bremssattel, der an einem ortsfesten Bremsträger durch zwei Befestigungselemente, bezogen auf die Bremsscheibe, axial verschiebbar befestigt ist. Die Figuren 7 und 8 illustrieren dazu jeweils ein Loslager in Schnittansicht in verschiedenen Stellungen (Figur 7 bei neuen Bremsbelägen und Figur 8 bei verschlissenen Bremsbelägen). Das Befestigungselement des Loslagers weist einen mit dem Bremsträger 1 fest verbundenen Führungsholm 9 auf. Der Führungsholm 9 ist mit einer Kopfschraube 10, die einen Kopf 19 aufweist, an dem Bremsträger 1 befestigt. welcher von einer Führungsbuchse 7 mit einer elastischen Innenhülse 11 in einer Außenhülse 13 umgriffen ist, die verschiebegesichert in einer Sattelbohrung 21 des Bremssattels 2 gehalten ist. An dem der Bremsscheibe abgewandten Endbereich des Führungsholms 9 ist ein diesen gegenüber der Umgebung abdichtender erster Rollbalg 12 angeordnet, der einerseits am Führungsholm 9 und andererseits in der Führungsbuchse 7 befestigt ist. Der erste Rollbalg 12 ist außerdem mittels einer in den Führungsholm 9 eingepressten Kappe 20 am Führungsholm 9 geklemmt angebracht.

Das Loslager umfasst weiterhin zu dem der Bremsscheibe zugewandten Bereich des Führungsholms 9 einen zweiten Rollbalg 14, einen Anschlagring 15, einen Haltering 16 mit einer in einer Ringnut 18 des Führungsholms 9 angeordneten Wulst 17. Der zweite Rollbalg 14 ist über den Anschlagring 15 mit der Innenhülse 11 und der Außenhülse 13 verbunden, wobei der Anschlagring 15 mittels Rastnase 23/Rastausnehmung 24 an der Innenhülse 11 angebracht ist. An der Verbindung zwischen dem zweiten Rollbalg 14 und dem Anschlagring 15 ist eine Dichtlippe 22 an dem Ende des zweiten Rollbalgs 14 angeformt, welche auf dem Führungsholm 9 aufliegt.

Eine ausführliche Beschreibung kann der DE 10 2012 021 690 A1 entnommen werden.

Diese Elastomer-Ausgleichlager werden ohne feste Kapselung eingesetzt, was für normale Anwendung ausreichend ist. Bei Einsatz in Fahrzeugen, welche auf unbefestigten oder stark verschmutzten Straßen betrieben werden, sowie auf Baustellen und bei Off-Road Fahrzeugen kann jedoch Steinschlag und Schmutzbeanspruchung Schädigungen der Abdichtung und Eintritt von Schmutzwasser in den Führungsbereich der Lagerbuchse verursachen. Die Folge davon kann zu stark erhöhtem Lagerverschleiß und vorzeitigem Austausch der Lagerbuchse führen.

Als weitere Ausgleichlager haben sich DU-Lager mit beidseitiger Abdichtung bewährt. Bei beiden Ausführungen müssen die offenen Enden mit einem zusätzlichen Bauteil abgedichtet werden. Dies erfordert eine zusätzliche Bearbeitung und Montage im Bremssattel und ist somit kostenaufwändig. Zudem neigen DU-Lager hinsichtlich ihres Spiels zu einer Geräuschbildung, was zusätzliche Dämpfungsmaßnahmen erforderlich macht.

In jedem Fall müssen die offenen Enden, also die der Bremsscheibe abgewandten Endbereiche mit einem zusätzlichen Bauteil abgedichtet werden, was bei einer in der DE 10 2006 050 647 A1 geoffenbarten Scheibenbremse durch eine aufgesetzte, mit dem Bremssattel verbundene Kappe erfolgt, die den endseitigen Mantelbereich sowie die Stirnseite des Führungsholms überdeckt.

Jedoch sind dazu eine zusätzliche Bearbeitung des Bremssattels sowie eine Montage der Kappe erforderlich, was zu entsprechenden zusätzlichen Kosten führt.

DE 196 36 942 C5 beschreibt eine Gleitsattelscheibenbremse, deren Sattel auf einem Führungsbolzen verschieblich geführt ist, wobei sich der Führungsbolzen durch eine Durchgangsöffnung des Sattels erstreckt und mit seinem freien Ende aus der Durchgangsöffnung herausragt und wobei eine schlauchförmige, längenveränderliche Dichtung vorgesehen ist, die einen Ringraum zwischen der Innenwand der Durchgangsöffnung und dem Führungsbolzen einseitig abdichtet und die einerseits an dem Sattel und andererseits an dem freien Ende des Führungsbolzens gehalten ist. Die Dichtung hintergreift mit einem Endabschnitt die Stirnseite des freien Endes des Führungsbolzens. Eine Halteeinrichtung ist vorgesehen, die zusammen mit der Stirnseite des freien Endes des Führungsbolzens ein im Querschnitt U-förmiges Ringprofil zum Halten des Endabschnitts der Dichtung bildet. Die Halteeinrichtung ist in Form eines mit einem Radialbund versehenen Stöpsels ausgeführt, der in einer stirnseitigen Ausnehmung des Führungsbolzens gehalten ist, und der Endabschnitt der Dichtung liegt an einer Mantelfläche des Stöpsels an.

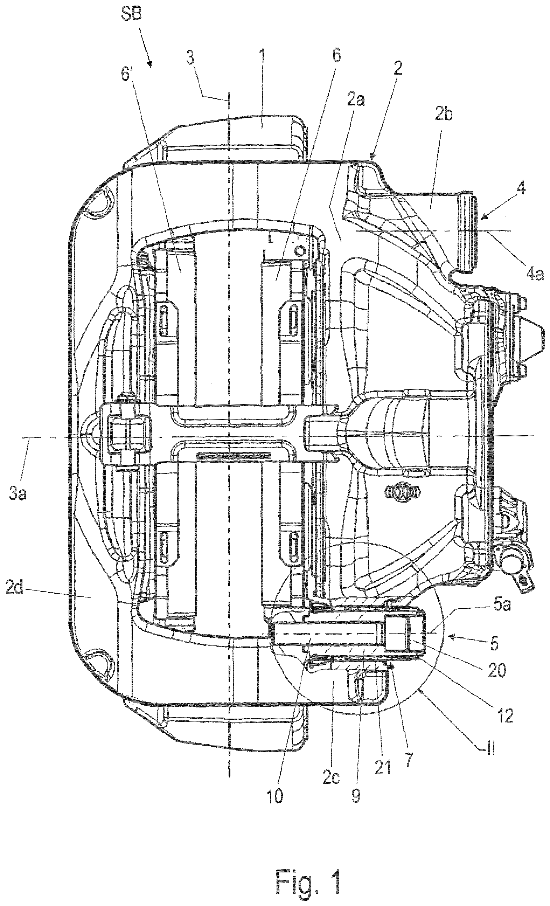

WO 2013/174964 A1 betrifft einen Balg einer Scheibenbremse eines Nutzfahrzeugs, insbesondere Faltenbalg, bei dem zumindest ein flexibler Bereich des Balges aus einem elastischen Material, insbesondere einem Elastomer, besteht. Auf einer Außenseite des Balges ist eine mit dem Balg verbundene und diesen zumindest abschnittsweise abschirmende Schutzeinrichtung angeordnet. Des Weiteren wird eine Scheibenbremse eines Nutzfahrzeuges beschrieben. In Fig. 1 ist ein Axiallager für einen Bremssattel 1 gezeigt, jedoch nicht beschrieben. Dieses Axiallager zeigt eine Schraube in einem Führungsholm, welcher durch die Schraube an einem vermutlich ortsfesten Teil befestigt ist. Der Führungsholm ist von einer Art Buchse umgeben, die zwischen einer Außenfläche des Führungsholms und einer Bohrung im Bremssattel angeordnet ist. An einem zu einem Kopf der Schraube weisenden Ende der Buchse ist die Buchse mit einer Dichtung versehen. Die Dichtung umgibt den Randbereich des Führungsholms und liegt mit einem umlaufenden Wulst auf einem Spalt, der zwischen dem Kopf der Schraube und dem Führungsholm gebildet ist. Dieser Wulst wird von einem Kragen einer Kappe in diesen Spalt gedrückt. Die Kappe ist mit einem zylinderförmigen Abschnitt in dem Kopf der Schraube angeordnet. Der umlaufende Kragen der Kappe weist eine radiale und eine axiale Abstützung für den Wulst der Dichtung auf, wobei die radiale Abstützung nach innen zu der Schraubenachse hin etwa 90° einer gerundeten Nut des Kragens ausmacht und die radiale Abstützung nach außen von der Schraubenachse weg weisend etwa 45° der gerundeten Nut beträgt.

WO 2007/023802 A1 beschreibt eine flexible Manschette für ein Gleichlauf-Kardangelenk, das die Vereinfachung der Manschettenmontage und der Manschettenherstellungsschritte ermöglicht. Die flexible Manschette umfasst einen Faltenbalg mit einem röhrenförmigen Teil mit großem Durchmesser, der an der äußeren Umfangsfläche eines äußeren Gelenkelements befestigt ist, einem röhrenförmigen Teil mit kleinem Durchmesser, der an der äußeren Umfangsfläche einer Welle befestigt ist, und einem flexiblen Teil mit U-Form im Querschnitt, der den Teil mit großem Durchmesser mit dem Teil mit kleinem Durchmesser verbindet, und einem zylindrischen Metalladapter zur Verstärkung, der in den Faltenbalg vulkanisiert und integriert ist, wobei am Teil mit großem Durchmesser mit dem Endteil des flexiblen Teils des Faltenbalgs begonnen wird. Ein Ende des Adapters wird um eine vorbestimmte Länge entlang des Außenumfangs des äußeren Verbindungselements vorstehen, und der vorstehende Teil des Adapters wird fest auf die äußere Umfangsfläche des äußeren Verbindungselements gestemmt.

DE 10 2012 021 690 A1 gibt eine Scheibenbremse für ein Nutzfahrzeug an, mit einem eine Bremsscheibe umfassenden Bremssattel, der an einem ortsfesten Bremsträger durch zwei Befestigungselemente, bezogen auf die Bremsscheibe, axial verschiebbar befestigt ist, wobei die Befestigungselemente jeweils einen mit dem Bremsträger fest verbundenen Führungsholm aufweisen, von denen zur axialen Verschiebbarkeit des Bremssattels einer als Festlager und der andere in einem als Loslager ausgebildeten Gleitlager geführt ist, wobei zumindest das Loslager eine den Führungsholm umgreifende und verschiebegesichert in einer Sattelbohrung des Bremssattels gehaltene Führungsbuchse mit einer elastischen Innenhülse aufweist. Zumindest an dem der Bremsscheibe abgewandten Endbereich des Führungsholms ist ein diesen gegenüber der Umgebung abdichtender erster Rollbalg angeordnet, der einerseits am Führungsholm und andererseits in der Führungsbuchse befestigt ist.

Der Erfindung liegt die Aufgabe zugrunde, eine Scheibenbremse der gattungsgemäßen Art so weiterzuentwickeln, dass mit konstruktiv einfachen Mitteln ihre Standzeit erhöht und ihre Herstellungskosten gesenkt werden.

Diese Aufgabe wird durch eine Scheibenbremse mit den Merkmalen des Anspruchs 1.

Damit wird eine druckdichte Kapselung des Loslagers der Scheibenbremse gegenüber der Umgebung und damit gegenüber fahrbedingten Einflüssen erreicht, ohne dass eine besondere Bearbeitung des Bremssattels erforderlich ist.

Vor allem beim Einsatz der neuen Scheibenbremse in Nutzfahrzeugen, die einer erhöhten Steinschlag- und Verschmutzungsgefahr ausgesetzt sind, verlängert sich durch die Erfindung die Standzeit der Scheibenbremse in dem durch die Befestigungselemente beeinflussten Maß.

Ein weiterer Vorteil besteht darin, dass die druckdichte Kapselung es ermöglicht, dass die Lagerung der Reinigung der Bremse mit einem Hochdruckreiniger standhält.

Der radiale und axiale Bauraum des bisherigen Lagers und die Funktionalität kann beibehalten werden.

Erfindungsmäßig ist vorgesehen, dass ein doppelseitiger Rollbalg auf der der Bremsscheibe zugewandten und der Bremsscheibe abgewandten Seite mit einem innen und außen verpressten und geschützten Dichtelement versehen ist. Zusätzlich wird der mittlere innenliegende Bereich des Lagers mit einem beidseitig verpressten und geschützten Dichtelement versehen.

Der radiale Bauraum im Inneren der HNBR-Elastomerhülse wird von dem außen liegenden Rollbalg unverändert genutzt, wogegen die Einhaltung des axialen Bauraums in einer Stellung bei neuen Bremsbelägen und bei verschlissenen Bremsbelägen dadurch eingehalten wird, indem das Lager um den Betrag des axial angebundenen dichtenden Ringabschnitts (O-Ring) innerhalb der Bohrung tiefer gesetzt wird.

Eine erfindungsgemäße Scheibenbremse für ein Nutzfahrzeug, mit einem eine Bremsscheibe umfassenden Bremssattel, der an einem ortsfesten Bremsträger durch zwei Befestigungselemente, bezogen auf die Bremsscheibe, axial verschiebbar befestigt ist, wobei die Befestigungselemente jeweils einen mit dem Bremsträger fest verbundenen Führungsholm aufweisen, von denen zur axialen Verschiebbarkeit des Bremssattels einer als Festlager und der andere in einem als Loslager, welches eine Loslagerachse aufweist, ausgebildeten Gleitlager geführt ist, wobei zumindest das Loslager eine den Führungsholm umgreifende und verschiebegesichert in einer Sattelbohrung des Bremssattels gehaltene Führungsbuchse aufweist, wobei zumindest an dem der Bremsscheibe abgewandten Endbereich des Führungsholms ein diesen gegenüber der Umgebung abdichtende erste schlauchförmige, längenveränderliche Dichtung angeordnet ist, die einerseits am Führungsholm und andererseits in der Führungsbuchse befestigt ist, wobei die erste schlauchförmige, längenveränderliche Dichtung mittels einer in den Führungsholm eingepressten Kappe am Führungsholm geklemmt ist, ist so ausgebildet, dass die erste schlauchförmige, längenveränderliche Dichtung einen Ringabschnitt aufweist, welcher in einer umlaufenden Nut zwischen einem Deckabschnitt, einem Kragen und einem Abschnitt einer Außenfläche eingesetzt ist, wobei der Ringabschnitt von dem Abschnitt der Außenfläche in Bezug auf die Loslagerachse radial nach innen gesichert gehalten ist, und wobei der Ringabschnitt von dem Deckabschnitt in Bezug auf die Loslagerachse radial nach außen gesichert gehalten ist.

Der Kragen ist an einem von der Bremsscheibe abgewandten Ende der Kappe angeformt, wobei die Außenfläche eine umlaufende Außenfläche eines zylindrischen Körpers der Kappe ist. Dies ermöglicht einen kompakten Aufbau und einen einfachen Zusammenbau.

In einer Ausführung berührt der Ringabschnitt die Außenfläche und den Deckabschnitt jeweils direkt und/oder indirekt. Damit ist nicht nur ein dichtes Anliegen des Ringabschnitts, sondern auch eine gesicherte Halterung einfach ermöglicht.

Wenn in eine Ausführung der Ringabschnitt in der umlaufenden Nut zwischen dem Deckabschnitt, dem Kragen und dem Abschnitt der Außenfläche radial vorgespannt gesichert gehalten ist, ergibt sich der Vorteil einer verbesserten Halterung und Abdichtung des Ringabschnitts in Bezug auf die Kappe.

In einer weiteren Ausführung bildet der Ringabschnitt in der umlaufenden Nut gegenüber der Kappe eine druckdichte Abdichtung. Dies ist besonders vorteilhaft, da so eine druckdichte Kapselung mit einer hohen IP-Schutzart ermöglicht wird, die ein Eindringen von Druckwasser wie z.B. beim Hochdruckreinigen verhindert und somit eine Standzeit des Loslagers durch reduzierte Korrosion verlängert. Zugleich kann auch der Führungsholm aus einem herkömmlichen Stahlwerkstoff anstelle eines Edelstahlwerkstoffs hergestellt sein.

In einer weiteren Ausführung weist der Ringabschnitt der ersten schlauchförmigen, längenveränderlichen Dichtung einen kreisförmigen Querschnitt auf, da so eine einfache Herstellung mit einem einfachen Werkzeug möglich ist, wobei eine gute Dichtwirkung z.B. bei einem Verpressen erzielt werden kann.

Hierbei ist es in der besonders bevorzugten Ausführung vorteilhaft, dass der Ringabschnitt in der umlaufenden Nut axial direkt oder indirekt gegen den Führungsholm vorgespannt ist, da so ein gesicherter Halt erzielt wird.

Die umlaufende Nut ist als eine Ringnut zwischen einer Unterseite des Deckabschnitts, einer Innenseite des Kragens und der Außenfläche gebildet, wobei der Deckabschnitt an dem äußeren radialen Ende des Kragens der Kappe angebracht ist und sich axial parallel zu der Loslagerachse in Richtung auf die Bremsscheibe erstreckt. Dies ist vorteilhaft für einen kompakten Aufbau.

In einer weiteren Ausführung ist vorgesehen, dass der Ringabschnitt in der umlaufenden Ringnut zwischen dem Deckabschnitt, dem Kragen und dem Abschnitt der Außenfläche der Kappe durch eine umlaufende Verpressung vorgespannt ist. Dies ist auf einfache Weise kostengünstig realisierbar.

Hierbei ist in einer noch weiteren Ausführung der Ringabschnitt in der Ringnut der Kappe von deren Kragen und dem Deckabschnitt in einem Winkelbereich von 160 bis 190° umhüllt, wobei die Außenfläche des Ringabschnitts zumindest mit der Außenfläche der Kappe und mit der Innenseite des Deckabschnitts der Kappe direkt oder indirekt in Kontakt steht. Auf diese Weise kann vorteilhaft ein zusätzlicher mechanischer Schutz gebildet werden.

Der Ringabschnitt ist in der umlaufenden Nut axial direkt oder indirekt gegen den Führungsholm vorgespannt. Dies ergibt eine vorteilhaft einfache und wirkungsvolle Fixierung und Abdichtung.

Eine besonders bevorzugte Ausführung sieht vor, dass der Ringabschnitt axial mit einem umlaufenden Steg verbunden ist, welcher in Kontakt mit einer umlaufenden Stirnfläche des Führungsholms steht. Der Steg bewirkt eine Abstützung an dem Führungsholm und erleichtert somit eine Montage der Kappe.

Wenn eine Verbindung zwischen dem Steg und dem Ringabschnitt mit einer Taillierung versehen ist, ergibt sich der Vorteil einer gezielten Steuerung einer Abrollbewegung des ersten Rollbalgs.

Eine noch andere Ausführung sieht vor, dass die erste schlauchförmige, längenveränderliche Dichtung über einen Verbindungsabschnitt an dem Ringabschnitt und an dem Steg angebracht ist, wobei der Verbindungsabschnitt eine Gelenkfunktion zwischen der schlauchförmigen, längenveränderlichen Dichtung und dem Ringabschnitt und dem Steg bildet. Dies ergibt einen vorteilhaft einfachen und kompakten Aufbau.

In einer Ausführung weist die Führungsbuchse eine elastische Innenhülse auf. Damit können Toleranzunterschiede einfach ausgeglichen werden.

Für einen kompakten Aufbau und eine vereinfachte Montage kann in einer Ausführung die erste schlauchförmige, längenveränderliche Dichtung mit der Innenhülse verbunden sein, wobei in einer alternativen Ausführung die erste schlauchförmige, längenveränderliche Dichtung mit der Innenhülse einstückig ausgebildet sein kann.

Eine noch weitere Ausführung sieht vor, dass die erste schlauchförmige, längenveränderliche Dichtung als ein Rollbalg ausgebildet ist, was einen vorteilhaft kompakten Aufbau ergibt.

Eine vorteilhafte weitere Dichtung wird dadurch ermöglicht, dass an der der ersten schlauchförmigen, längenveränderlichen Dichtung gegenüberliegenden Seite der Führungsbuchse eine zweite schlauchförmigen, längenveränderlichen Dichtung angeschlossen ist, die andererseits mit dem Führungsholm verbunden ist. Damit kann eine druckdichte Kapselung des Lagers einfach erreicht werden.

In einer Ausführung ist die zweite schlauchförmigen, längenveränderlichen Dichtung an einem Anschlagring befestigt, der mit der Führungsbuchse verbunden ist, vorzugsweise verrastet ist. Dies ist vorteilhaft für einen kompakten Aufbau und einen einfachen Zusammenbau.

Für eine vorteilhafte Dichtung ist vorgesehen, dass die zweite schlauchförmige, längenveränderliche Dichtung an ihrer dem Anschlagring abgewandten Kante einen Wulst aufweist, der in einer Ringnut des Führungsholms einliegt und durch einen im Bremssattel befestigten Haltering in der Ringnut gehalten ist.

In einer weiteren Ausführung weist der Anschlagring an seiner Außenfläche eine umlaufende Nut mit einer Dichtung auf. Dies ist vorteilhaft, da der Anschlagring somit mehrere Funktionen, d.h. Verbinden, Dichten in einem Bauteil aufweisen kann.

Wenn die Dichtung mindestens eine Doppeldichtlippe aufweist, kann eine vorteilhafte Dichtwirkung in der zugehörigen Bohrung bewirkt werden.

Alternativ kann die Dichtung als mindestens eine Doppeldichtlippe an dem Anschlagring in der Nut angeformt sein, woraus sich ein besonders kompakter Aufbau ergibt.

Eine weitere Ausführung sieht vor, dass die zweite schlauchförmige, längenveränderliche Dichtung als ein zweiter Rollbalg ausgebildet ist. Damit ergibt sich ein kompakter und einfacher Aufbau.

### Es ergeben sich folgende Vorteile:

- 1.: Eine druckdichte Kapselung des außenliegenden (ersten) Rollbalgs durch einen als O-Ring angeformten Ringabschnitt in einer Ringnut von Kappe und Dichtung durch beidseitige Verpressung mit einer zusätzlichen Schirmwirkung durch die Kappe und einer Steuerung der Abrollbewegung.
- 2.: Eine druckdichte Kapselung des innenliegenden (zweiten) Rollbalgs durch eine angeformte/angespritzte Doppeldichtlippe in einer Ringnut des angespritzten Anschlagrings und Dichtung durch Verpressung in Bohrung in geschützter Lage.
- 3.: Eine druckdichte Kapselung des innenliegenden (zweiten) Rollbalgs durch einen angespritzten Wulst bzw. Quadring und Dichtung durch Verpressung in Ringnut des Führungsholms und Haltering bzw. Stützring in geschützter Lage.
- 4.: Eine Erleichterung der Montage durch Abstützung durch einen angespritzten Steg an dem Ringabschnitt (O-Ring).
- 5.: Damit ist auch eine automatisierte Montage ermöglicht.
- 6.: Eine Nachrüstung ist möglich.
- 7.: Ein Schlagschutz ist durch die exponierte Kappe im Neuzustand vorhanden.
- 8.: Bauraumforderungen seitens der Kunden sind im Neuzustand durch die Außenkante der Kappe, und im Verschleißzustand durch die Außenkante des ersten Rollbalgs erfüllt.
- 9.: Die zusätzlichen Dichtelemente/-strukturen ermöglichen weiterhin eine so genannte Baukastenausführung mit allen Vorteilen derselben.
- 10.: Da der Führungsholm druckdicht gekapselt ist, kann anstelle einer Edelstahlversion ein Führungsholm aus üblichem Stahl verwendet werden, wodurch sich Kostenvorteile bei Material und Bearbeitung ergeben.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Scheibenbremse in einer schematischen Draufsicht in einem nicht verschlissenen Zustand mit einem Loslager in einer Teilschnittansicht;
- Figur 2: eine vergrößerte, schematische Schnittansicht des Loslagers der Markierung II nach Figur 1 in einer ersten Stellung;
- Figur 3-3a: vergrößerte, schematische Schnittansichten der Markierung III nach Figur 2;
- Figur 4: eine schematische Draufsicht der Scheibenbremse nach Figur 1 in einem verschlissenen Zustand;
- Figur 5: eine vergrößerte, schematische Schnittansicht des Loslagers der Markierung V nach Figur 4 in einer zweiten Stellung;
- Figur 6: eine vergrößerte, schematische Schnittansicht der Markierung VI nach Figur 5;
- Figur 6a: eine vergrößerte, schematische Schnittansicht eines weiteren Ausführungsbeispiels in einem nicht verschlissenen Zustand; und
- Figur 7 und 8: schematische Schnittansichten eines Loslagers in verschiedenen Stellungen nach dem Stand der Technik.

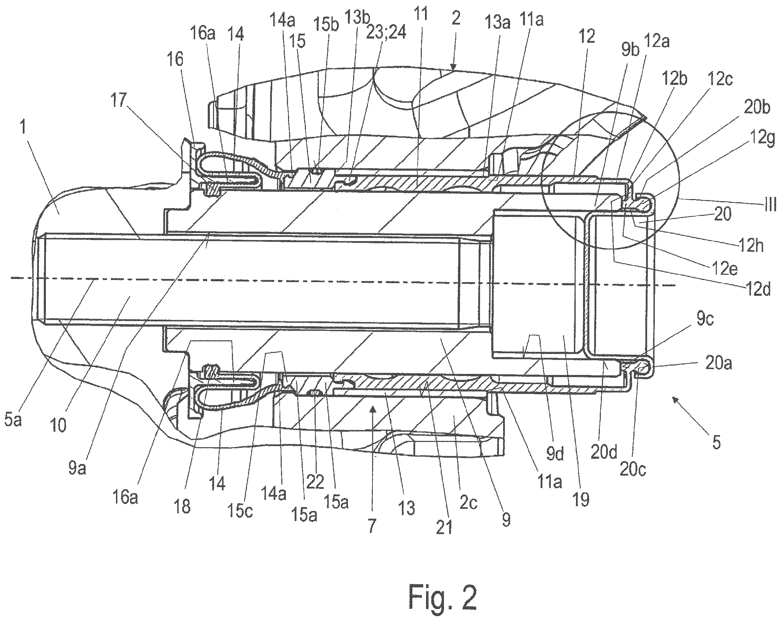

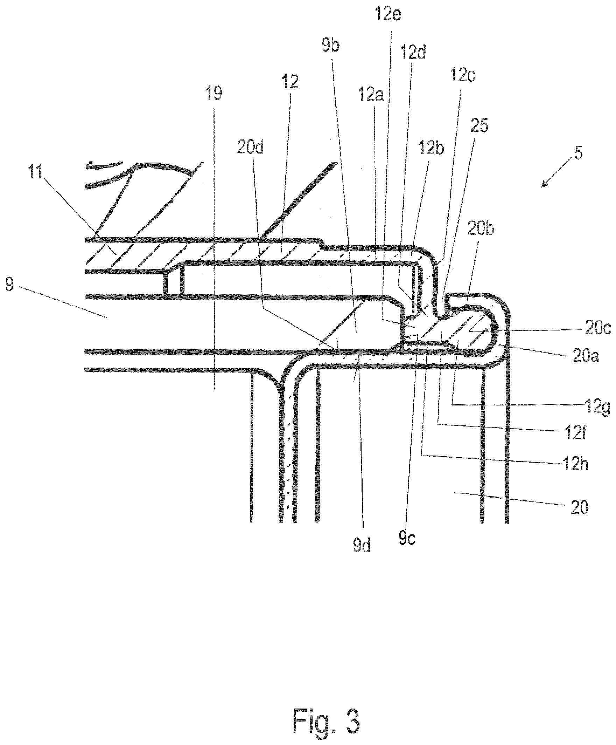

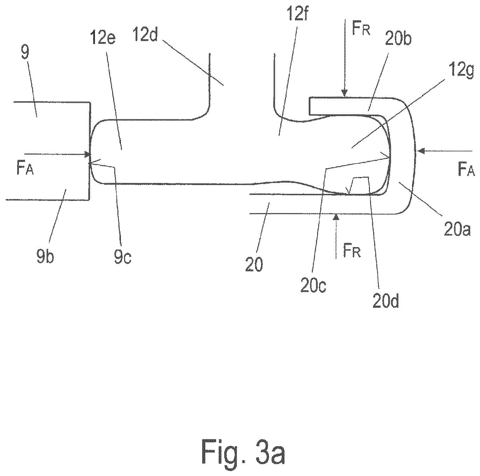

**Figur 1** zeigt eine erfindungsgemäße Scheibenbremse SB in einer schematischen Draufsicht in einem nicht verschlissenen Zustand mit einem Loslager 5 in einer Teilschnittansicht. In **Figur 2** ist eine vergrößerte, schematische Schnittansicht des Loslagers 5 der Markierung II nach Figur 1 in einer ersten Stellung gezeigt. **Figur 3** stellt eine vergrößerte, schematische Schnittansicht der Markierung III nach Figur 2 dar.

Die Scheibenbremse SB ist in diesem Beispiel für ein Nutzfahrzeug vorgesehen und umfasst einen Bremsträger 1, einen Bremssattel 2, eine Bremsscheibe 3 mit einer Bremsscheibendrehachse 3a und Bremsbeläge 6, 6'.

Die Bremsscheibe 3 ist hier nur symbolisch durch eine Mittellinie angedeutet, welche in einer Mittelebene der Bremsscheibe 3 verläuft.

Der Bremsträger 1 ist ortsfest an einem Fahrzeug, welchem die Scheibenbremse SB zugeordnet ist, angebracht. Der Bremssattel 2 weist einen Zuspannabschnitt 2a mit zwei Lagerabschnitten 2b, 2c und einen Sattelrücken 2d, der mit dem Zuspannabschnitt 2a verbunden ist, auf. Die Bremsscheibe 3 wird von dem Bremssattel 2 so übergriffen, dass sie zwischen dem Zuspannabschnitt 2a und dem Sattelrücken 2d angeordnet ist.

Beiderseits der Bremsscheibe 3 ist jeweils ein Bremsbelag 6, 6' in dem Bremsträger 1 angeordnet. Der Bremsbelag 6, der auf der zu dem Zuspannabschnitt 2a des Bremssattels 2 weisenden Seite der Bremsscheibe 3 angeordnet ist, wird zuspannseitiger Bremsbelag 6 genannt. Der andere Bremsbelag 6' wird in Bezug auf den Sattelrücken 2d des Bremssattels 2 als rückenseitiger Bremsbelag 6' bezeichnet.

Der Bremssattel 2 ist an dem Bremsträger 1, bezogen auf die Bremsscheibe 3, in Richtung der Bremsscheibendrehachse 3a axial verschiebbar angebracht. Hierzu sind zwei Befestigungselemente vorgesehen, von denen eines ein Festlager 4 mit einer Festlagerachse 4a und das andere das Loslager 5 mit einer Loslagerachse 5a bildet. Die Festlagerachse 4a und die Loslagerachse 5a verlaufen zueinander und zu der Bremsscheibendrehachse 3a parallel.

Das Loslager 5 umfasst eine Führungsbuchse 7, einen Führungsholm 9, eine Kopfschraube 10 mit einem Kopf 19, eine Innenhülse 11, eine erste schlauchförmige, längenveränderliche Dichtung, die hier als ein erster Rollbalg 12 (äußerer Rollbalg 12) ausgebildet ist, eine Außenhülse 13, eine zweite schlauchförmige, längenveränderliche Dichtung, die hier als ein zweiter Rollbalg 14 (innerer Rollbalg 14) ausgebildet ist, einen Anschlagring 15 und einen Haltering 16.

Das Loslager 5 wird hier als ist ein so genanntes Doppelrollbalglager bezeichnet.

Der Führungsholm 9 ist mittels einer durch eine zentrale Bohrung 9a im Führungsholm 9 durchgeführten Kopfschraube 10 mit dem Bremsträger 1 fest verbunden.

Der Bremssattel 2 weist an beiden Seiten des Zuspannabschnitts 2a jeweils einen Lagerabschnitt 2b, 2c auf. Der eine Lagerabschnitt 2b nimmt das Festlager 4 auf, und der andere Lagerabschnitt 2c ist mit dem Loslager 5 versehen. In dem anderen Lagerabschnitt 2c ist die Führungsbuchse 7 des Loslagers 5 verschiebegesichert gehalten, wobei der Bremssattel 2 darüber auf dem Führungsholm 9 verschiebbar gelagert ist.

Die Führungsbuchse 7 weist in dem gezeigten Ausführungsbeispiel die elastische Innenhülse 11 und die diese umschließende metallische Außenhülse 13 auf, die in eine Sattelbohrung 21 des anderen Lagerabschnitts 2c des Bremssattels 2 gepresst ist. In einer anderen, nicht gezeigten Ausführung weist die Führungsbuchse 7 nur die Außenhülse 11 ohne die elastische Innenhülse 11 auf, wobei die Außenhülse 11 mit ihrer Innenbohrung dann direkt auf den Führungsholm 9 aufgeschoben ist und eine entsprechend dickere Wandstärke aufweisen kann.

Die Innenhülse 11 besteht aus einem Kunststoff, bevorzugt einem Elastomer, beispielsweise HNBR, und ist an die Innenwand der Außenhülse 13 angespritzt. Innenseitig stützt sich die Innenhülse 11 am Führungsholm 9 ab.

An einem der Bremsscheibe 3 abgewandten Endabschnitt 9b des Führungsholms 9 ist der erste Rollbalg 12 vorgesehen, der den Führungsholm 9 gegenüber der Umgebung abdichtet. Der erste Rollbalg 12 ist einerseits am Führungsholm 9 und andererseits an der Führungsbuchse 7 befestigt.

Die Befestigung des ersten Rollbalgs 12 an der Führungsbuchse 7 kann direkt an der Führungsbuchse 7 oder/und an der Innenhülse 11 (wenn diese vorhanden ist) erfolgen. Der erste Rollbalg 12 kann auch, wie in dem hier gezeigten Ausführungsbeispiel realisiert, einstückig mit der Innenhülse 11 ausgebildet sein, d.h., er besteht aus demselben Material und bildet quasi eine Verlängerung der Innenhülse, wobei er sich über den Endabschnitt 9b des Führungsholms 9 erstreckt. Zur Festlegung des ersten Rollbalgs 12 am Führungsholm 9 ist der erste Rollbalg 12 mit seinem freien Ende mittels einer Kappe 20, die einen Kopf 19 der Kopfschraube 10 überdeckt und die stirnseitig in eine Kopfbohrung 9d des Führungsholms 9 eingepresst ist, verklemmt. Dies wird nun detailliert beschrieben.

Im Unterschied zum Stand der Technik nach den Figuren 7 und 8, welcher in der DE 10 2012 021 690 A1 ausführlich beschrieben ist, umfasst der erste Rollbalg 12 hier Balgabschnitte 12a, 12b und 12c, einen Verbindungsabschnitt 12d, einen Steg 12e und einen Ringabschnitt 12g.

Ein von der Bremsscheibe 3 abgewandtes Ende 13a der Außenhülse 13 liegt axial an einer Schulter 13a der Innenhülse 13 an. Ein der Bremsscheibe 3 zugewandtes Ende 13b der Außenhülse 13 steht mit dem Anschlagring 15 in Kontakt.

In einem weiteren Unterschied zum oben genannten Stand der Technik weist die Kappe 20 nicht nur einen Kragen 20a, welcher an dem von der Bremsscheibe 3 abgewandten Ende eines zylindrischen Körpers der Kappe 20 angeformt ist, auf, sondern zusätzlich einen umlaufenden Deckabschnitt 20b, der an dem äußeren radialen Ende des Kragens 20a angebracht ist und sich axial im Wesentlichen parallel zu der Loslagerachse 5a in Richtung auf die Bremsscheibe 3 erstreckt. Zwischen einer Unterseite des Deckabschnitts 20b, einer Innenseite des Kragens 20a und einer umlaufenden Außenfläche 20d des zylindrischen Körpers der Kappe 20 ist eine Nut 20c ausgebildet.

**Figur 2** **und** **3** zeigen eine Stellung des Loslagers 5, in welcher die Bremsbeläge 6, 6' der Scheibenbremse SB neu und noch nicht verschlissen sind. Dabei ist der erste Balgabschnitt 12a des ersten Rollbalgs 12 über dem Endabschnitt 9b des Führungsholms 9 angeordnet. Über den in dieser Stellung um ca. 90° zur Loslagerachse 5a hin umgebogenen zweiten Balgabschnitt 12b ist der erste Balgabschnitt 12a mit dem dritten Balgabschnitts 12c verbunden, welcher sich radial zur Loslagerachse 5a hin erstreckt und in ein äußeres radiales Ende des Verbindungsabschnitts 12d übergeht.

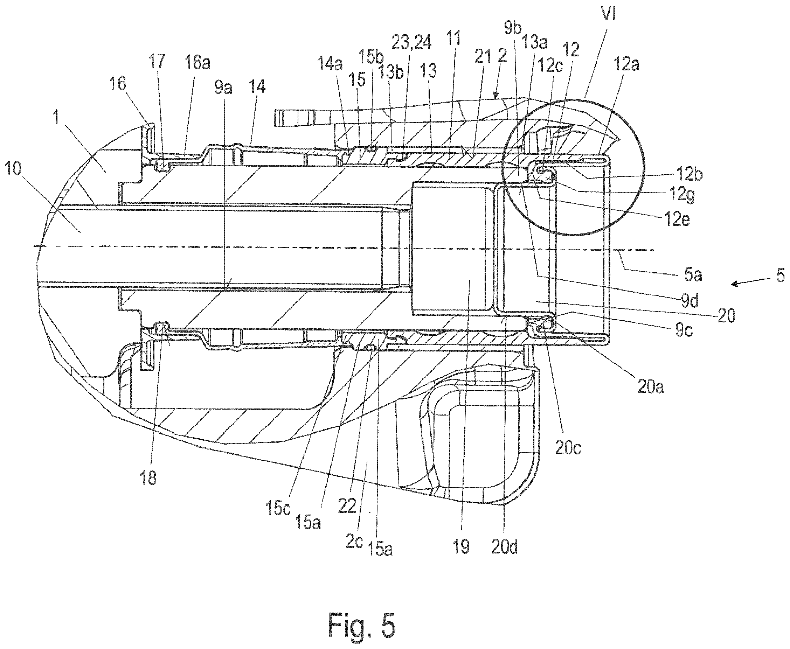

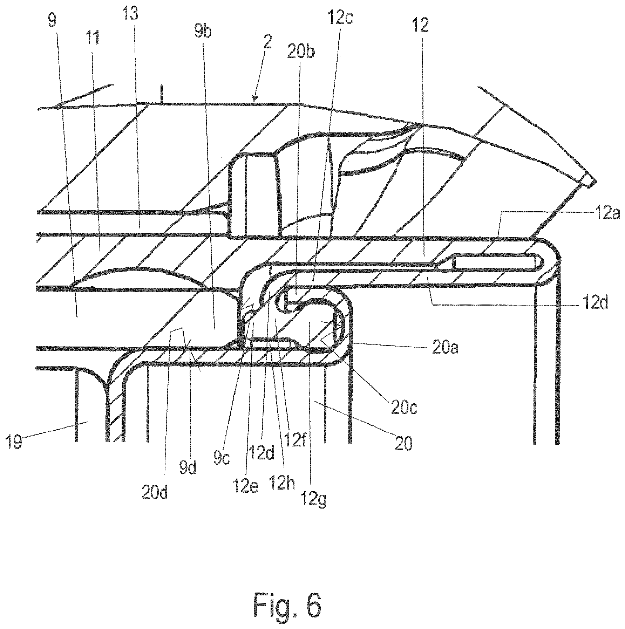

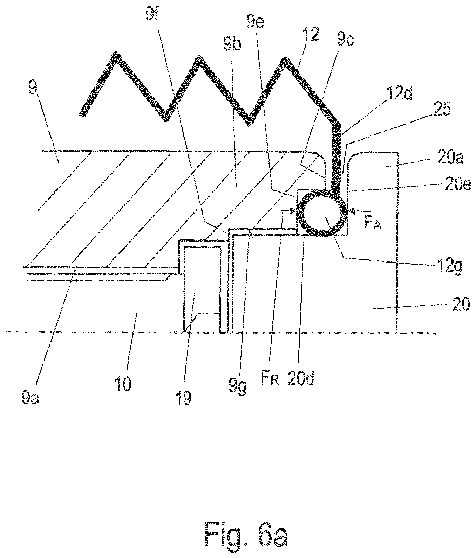

Der Verbindungsabschnitt 12d seinerseits ist mit seinem inneren radialen Ende mit dem umlaufenden Steg 12e verbunden, wobei der Verbindungsabschnitt 12d eine Gelenkfunktion zwischen der schlauchförmigen, längenveränderlichen Dichtung, d.h. erster Rollbalg 12, und dem Ringabschnitt 12g und dem Steg 12e bildet. Dies ist in Figur 5 und 6 deutlich gezeigt.

Der Steg 12e erstreckt sich in axialer Richtung im Wesentlichen parallel zu der Loslagerachse 5a in einem zu der Bremsscheibe 3 weisenden Abschnitt und in axialer Gegenrichtung dazu. Der Abschnitt des Stegs 12e, welcher zu der Bremsscheibe 3 weist, steht in Kontakt mit einer umlaufenden Stirnfläche 9c des Führungsholms 9

Der andere Abschnitt des Stegs 12e, welcher von der Bremsscheibe 3 weg weist, ist mit dem Ringabschnitt 12g verbunden. Diese Verbindung zwischen dem Steg 12e und dem Ringabschnitt 12g ist mit einer Taillierung 12f versehen. Auf diese Weise ist der Ringabschnitt 12g axial an den Steg 12e angebunden.

**Figur 3a** zeigt eine weitere schematische Schnittansicht des Ringabschnitts 12g in Zusammenwirkung mit der Kappe 20 und des Stegs 12e in Zusammenwirkung mit der Kappe 20 und dem Führungsholm 9.

Der Ringabschnitt 12g ist in der umlaufenden Nut 20c zwischen Deckabschnitt 20b, Kragen 20a und Außenfläche 20d der Kappe 20 eingesetzt. Dabei ist der Ringabschnitt 12g radial nach innen zu der Loslagerachse 5a (siehe Fig. 2) durch eine Außenfläche 20d der Kappe 20 gesichert gehalten. Der Ringabschnitt 12g steht dabei mit der Außenfläche 20d direkt oder auch indirekt, z.B. über ein Einlegeteil oder/und Kleber, in Kontakt. Der Begriff "radial nach innen" bedeutet eine Richtung in Bezug auf die Loslagerachse 5a (siehe Fig. 2).

Radial nach außen, d.h. in einer Richtung in Bezug auf die Loslagerachse 5a von dieser radial nach außen verlaufend, ist der Ringabschnitt 12g von dem Deckabschnitt 20b der Kappe 20 gesichert gehalten. Hierbei steht der Ringabschnitt 12g mit einer Unterseite des Deckabschnitts 20b direkt oder auch indirekt, z.B. über ein Einlegeteil oder/und Kleber, in Kontakt.

Das Einlegeteil kann z.B. eine halboffene Einlegehülle sein, welche die Nut 20c vollständig oder auch nur teilweise auskleidet. Es kann sich hierbei auch um eine Beschichtung der Nut 20c handeln, beispielsweise eine flüssige Dichtung oder ein Dichtungskleber.

Der Ringabschnitt 12g ist in der umlaufenden Nut 20c zwischen dem Deckabschnitt 20b, dem Kragen 20a und dem Abschnitt der Außenfläche 20d der Kappe 20 radial vorgespannt gesichert gehalten. Dabei wirkt jeweils eine Radialvorspannkraft F_{R} radial nach innen (oberer Pfeil) und radial nach außen (unterer Pfeil) auf den Ringabschnitt 12g.

Die Radialvorspannkräfte F_{R} können z.B. dadurch erzeugt werden, dass der Ringabschnitt 12g in der umlaufenden Nut 20c zwischen dem Deckabschnitt 20b, dem Kragen 20a und dem Abschnitt der Außenfläche 20d der Kappe 20 durch eine umlaufende Verpressung des Deckabschnitts 20b vorgespannt ist. Durch die jeweilige Radialvorspannkraft F_{R} wird bewirkt, dass der Ringabschnitt 12g des ersten Rollbalgs 12 in der umlaufenden Nut 20c gegenüber der Kappe 20 eine druckdichte Abdichtung, die auch als druckdichte Kapselung bezeichnet wird, bildet. Diese druckdichte Kapselung bildet eine so genannte IP-Schutzart gegen Eindringen von unter Druck stehender Flüssigkeit, z.B. bei Reinigung mit Hochdruckreinigern. Damit kann die Schutzart IP 69 nach DIN EN 60529 bzw. IP6K9K nach ISO 20653 (6: staubdicht; 9: Schutz gegen Wasser bei Hochdruck-/Dampfstrahlreinigung) erreicht werden.

Eine solche Abdichtung kann auch durch einen Dichtungskleber oder ein dichtendes Einlegeteil, wie oben erwähnt, realisiert werden.

Dabei wird der Ringabschnitt 12g in der Nut 20c der Kappe 20 von einem Abschnitt der Außenfläche 20d der Kappe 20, von dem Kragen 20a der Kappe 20 und von dem Deckabschnitt 20b der Kappe 20 in einem Winkel umhüllt, wobei der Winkel einen Wert im Bereich von 160° bis 190°, vorzugsweise 180°, aufweist. Unter dem Begriff "umhüllt" ist zu verstehen, dass die Außenfläche des Ringabschnitts 12g zumindest mit der Außenfläche 20d der Kappe 20 und mit der Innenseite des Deckabschnitts 20b der Kappe 20 direkt oder indirekt in Kontakt steht, wie oben beschrieben ist.

Wenn der Ringabschnitt 12g mit der Radialvorspannkraft F_{R} beaufschlagt ist, wird auch eine axiale Vorspannung des Ringabschnitts 12g zusammen mit dem daran angebrachten Steg 12e durch Axialvorspannkräfte F_{A} erzeugt. Dabei stützt sich der Ringabschnitt 12g in der Nut 20c an der Innenseite des Kragens 20a der Kappe 20 ab, wobei sich der Steg 12e an der Stirnfläche 9c des Führungsholms 9 abstützt.

Der Ringabschnitt 12g weist hier einen kreisringförmigen Querschnitt auf und kann auch als O-Ringabschnitt bezeichnet werden. Es ist natürlich auch möglich, dass andere Querschnittsformen, z.B. Quadring, eingesetzt werden können.

Diese Nut 20c zwischen Deckabschnitt 20b, Kragen 20a und Außenfläche 20d der Kappe 20 dient als ein Gehäuse für den axial angespritzten Ringabschnitt 12g vom außenliegenden ersten Rollbalg 12 und steuert zugleich eine Abrollbewegung, die sich durch Verschleiß der Bremsbeläge 6, 6' (und auch der Bremsscheibe 3) ergibt. Der Ringabschnitt 12g ist auf diese Weise beidseitig zwischen Deckabschnitt 20b und Außenfläche 20d der Kappe 20 verpresst, wobei die exponierte Lage des Ringabschnitts 12g zugleich vor Beschädigung geschützt ist.

Der Steg 12e, welcher auf der Seite des Ringabschnitts 12g, die zur Bremsscheibe 3 weist, angeformt ist, bildet durch seinen Kontakt mit der planen Stirnfläche 9c des Führungsholms 9 eine spielfreie Abstützung an dem Führungsholm 9. Dadurch ist es zudem möglich, dass die Kappe 20 mit der Nut 20c sicher montiert werden kann.

Die mit der Taillierung 12f versehene Anbindung des Ringabschnitts 12g an den Steg 12e dient neben einem konstruktiv vorgehaltenen Spiel 25 (zwischen Deckabschnitt 20b und dem dritten Balgabschnitt 12c zum Toleranzausgleich zwischen den Bauteilen.

Das Spiel 25 ist als konstruktive Luft zum Toleranzausgleich zwischen Kappe 20 mit Nut 20c, Führungsholm 9 aus üblichem Stahl und erstem Rollbalg 12 mit Schutz vor Beschädigung vorgesehen.

Zudem ist ein umlaufender Zwischenraum 12h zwischen der radialen Innenfläche des Stegs 12e und der Außenfläche 20d der Kappe 20 vorgesehen.

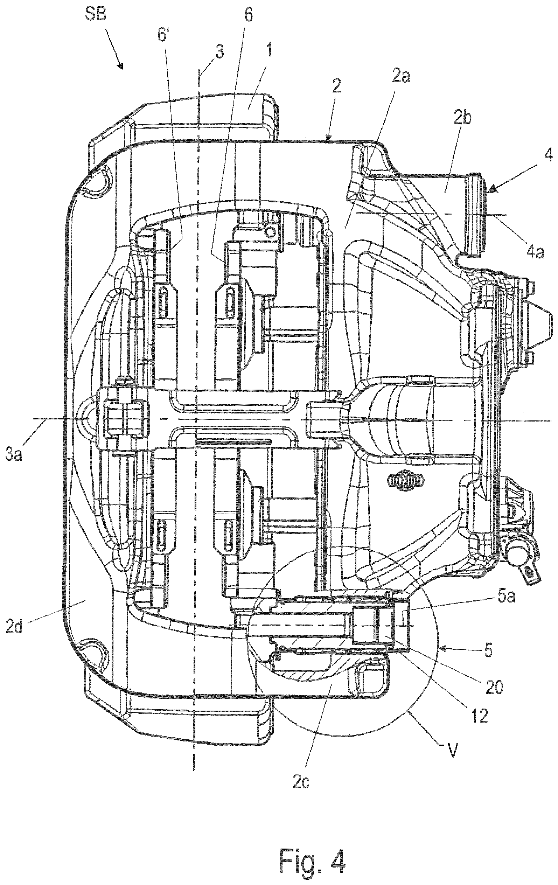

**Figur 4** zeigt eine erfindungsgemäße Scheibenbremse SB in einer schematischen Draufsicht in einem verschlissenen Zustand der Bremsbeläge 6, 6' in einer Teilschnittansicht. **Figur 5** stellt eine vergrößerte, schematische Schnittansicht des Loslagers 5 der Markierung V nach Figur 4 in einer zweiten Stellung dar. In **Figur 6** ist eine vergrößerte, schematische Schnittansicht der Markierung VI nach Figur 5 gezeigt.

**Figur 5** **und** **6** zeigen eine zweite Stellung des Loslagers 5, in welcher die Bremsbeläge 6, 6' (auch die Bremsscheibe 3) der Scheibenbremse SB verschlissen sind.

In der zweiten Stellung, d.h. bei verschlissenen Bremsbelägen 6, 6', sind der erste Balgabschnitt 12a teilweise und der zweite Balgabschnitt 12b und der dritte Balgabschnitt 12c des ersten Rollbalgs 12 unter den nach außen stehenden Teil des Rollbalgs 12 um 180° umgeschlagen. Der Verbindungsabschnitt 12d ist nach außen, d.h. von der Bremsscheibe 3 weg weisend, über den Deckabschnitt 20b der Kappe 20 gebogen.

Der Ringabschnitt 12g ist weiterhin in druckdichter Position in der Nut 20c der Kappe 20 angeordnet.

Ein mittlerer innenliegender Bereich an der Verbindungsstelle der Innenhülse 11 mit dem zweiten Rollbalg 14, der auch als innerer Rollbalg 14 bezeichnet wird, weist den Anschlagring 15 mit der Klipsverbindung auf. Dabei ist der zweite Rollbalg 14 einerseits mit der Führungsbuchse 7 und andererseits mit dem Führungsholm 9 verbunden, wobei zur Verbindung mit der Führungsbuchse 7 der Anschlagring 15 vorgesehen ist, der mit einer umlaufenden Rastnase 23 als eine Art Widerhaken in eine umlaufende Rastausnehmung 24 der Innenhülse 11 formschlüssig eingreift, während der zweite Rollbalg 14 am anderen Randbereich an den Anschlagring 15 angespritzt ist. Auf diese Weise sind die beiden Bauteile formschlüssig miteinander verbunden.

Der zweite Rollbalg 14 überdeckt den freien Mantelbereich des Führungsholms 9.

Der Anschlagring 15 weist an seiner Außenfläche eine umlaufende Nut 15b zwischen zwei umlaufenden Vorsprüngen 15a auf. In dieser Nut 15b ist eine Dichtung 22 mit einer eigenständigen Doppeldichtlippe in geschützter Lage angeordnet. Diese Dichtung 22 kann auch angespritzt sein. Damit wird eine druckdichte Kapselung an dieser Stelle erreicht. Die Doppeldichtlippe der Dichtung 22 wirkt mit der Innenwand der Sattelbohrung 21 zusammen, welche eine als Passung ausgeführte Bohrung für die in den Blechmantel der Außenhülse 13 eingespritzte Innenhülse 11, z.B. HNBR-Elastomer, ist und auf diese Weise abgedichtet wird.

Die Aufgabe dieser "radialen Dichtung 22 mittels angespritzter Dichtlippe in der Sattelbohrung 21" wird in der DE 10 2012 021 690 A1 ausführlich beschrieben. Im Unterschied dazu ist jedoch die Nut 15b in dem Anschlagring 15 mit der eigenständig angespritzten Dichtung 22 mit Doppeldichtlippe.

Die der Bremsscheibe 3 zugewandte und somit höher temperaturbelastete Stelle ist beispielsweise ein Dichtelement in der Form eines Sillikon-Rollbalgs als zweiter Rollbalg 14, der an dem bereits beschriebenen Anschlagring 15 angespritzt ist.

Das andere Ende des innenliegenden zweiten Rollbalgs 14 (Silikon-Rollbalg) dichtet radial in einer Ringnut 18 im Führungsholm 9 als eine Wulst 17 und wird mittels des Halterings 16 beidseitig verpresst und formschlüssig gesichert. Der Haltering 16 weist dazu einen umlaufenden Ringabschnitt 16a auf, der sich axial von der Bremsscheibe 3 weg erstreckt. Der zweite Rollbalg 14 ist um diesen Ringabschnitt 16a umgeschlagen.

Der Haltering 16 wiederum erfüllt die Funktion der Abschirmung des Silikon-Rollbalgs als zweiter Rollbalg 14 gegen Temperatur und mechanische Beschädigung sowie der Sicherung der Dichtfunktion des Wulsts 17, z.B. Quadring, vom angespritzten zweiten Rollbalg 14 in der Ringnut 18.

Durch den Haltering 16 wird eine zuverlässige Abdichtung der Wulst 17 (Quadring) zur Ringnut 18 im Führungsholm 9 sichergestellt, indem er durch seine Formgebung den Wulst 17 (Quadring) in der Ringnut 18 unter leichtem Anpressdruck auch bei der Abrollbewegung sicherstellt.

Der Haltering 16 ist in seiner Form derart ausgeführt, dass er den Weg des zweiten Rollbalgs 14 auf der Seite des Bremsträgers 1 begrenzt und somit einen Sicherheitsabstand zu der der Bremsscheibe 3 zugewandten Seite erzeugt. Dadurch führt der zweite Rollbalg 14 eine geleitete, umgelenkte Abrollbewegung aus und ist nicht im vollen Umfang dem temperaturgefährdeten Bereich ausgesetzt. Die Aufgabe der "radialen Dichtung 17 in einer Ringnut 18 vom Führungsholm 9 mit beidseitiger Verpressung durch den Haltering 16" kann der DE 10 2012 021 690 A1 entnommen werden.

Auf diese Weise ist der Führungsholm 9 durch den ersten Rollbalg 12 einschließlich der Innenhülse 11 und den zweiten Rollbalg 14 abgedichtet und kann aus üblichem Stahlwerkstoff anstelle aus Edelstahl hergestellt sein.

In **Figur 6a** ist eine vergrößerte, schematische Schnittansicht eines weiteren Ausführungsbeispiels des Loslagers 5 in einem nicht verschlissenen Zustand dargestellt.

Im Gegensatz zu dem ersten Ausführungsbeispiel ist hier der Ringabschnitt 12g des ersten Rollbalgs 12 in einer Nut 9e des Endabschnitts 9b des Führungsholms 9 angeordnet. Die Nut 9e ist in die Stirnfläche 9c des Endabschnitts 9 eingeformt. Dabei wird ein umlaufender Deckabschnitt 9h gebildet, der an der radialen Außenseite der Nut 9e im Endabschnitt 9b des Führungsholms 9 angeordnet ist. Der Deckabschnitt 9h erstreckt sich axial parallel zu der Loslagerachse 5a.

Die Kappe 20 weist den Kragen 20a ohne Deckabschnitt 20b auf und stützt sich nicht auf dem Kopf 19 der Kopfschraube 10 ab, sondern an einer Schulter 9f einer zu der Bohrung 9a koaxialen Stufenbohrung 9g ab.

Der Ringabschnitt 12g ist so in der Nut 9e eingesetzt, dass er mit deren Stirnwand, einer Innenseite des Deckabschnitts 9h, einem Abschnitt der Außenfläche 20d der Kappe 20 und einer Anlagefläche 20e des Kragens 20a der Kappe 20 direkt oder indirekt in Kontakt steht.

Durch Einpressen der Kappe 20 mit ihrer Außenfläche 20d in die Stufenbohrung 9g des Endabschnitts 9b des Führungsholms 9 wird der Ringabschnitt 12g des ersten Rollbalgs 12 axial gegen die Stirnwand der Nut 9e gedrückt und vorgespannt, wobei Axialvorspannkräfte F_{A} wirken. Gleichzeitig wird dadurch auch eine radiale Vorspannung in dem Ringabschnitt 12g erzeugt, welcher sich gegen die Unterseite des Endabschnitts 9h und die Außenfläche 20d der Kappe 20 radial abstützt.

Zwischen der Anlagefläche 20e des Kragens 20a der Kappe 20 und der Stirnfläche 9c des Endabschnitts 9b des Führungsholms 9 ist das oben beschriebene Spiel 25 vorgesehen.

Ein Werkstoff der Kappe 20 kann ein Metall, eine Kombination aus einem geeigneten Kunststoff und Metall oder aus einem geeigneten Kunststoff sein.

Die Erfindung ist nicht auf die beschriebenen Ausführungsbeispiele beschränkt, sondern kann im Rahmen der Ansprüche modifiziert werden.

So ist es z.B. denkbar, dass anstelle der Dichtfunktion zwischen dem Ringabschnitt 12g des ersten Rollbalgs 12 und der Kappe 20 eine Dichtfunktion auf die Kappe 20 verlegt wird. Dabei kann die Außenfläche 20d der Kappe 20 in der zugehörigen Bohrung 9a des Führungsholms 9 gegenüber dem Führungsholm 9 mittels geeigneter Dichtungsanordnung abgedichtet werden. Dies kann z.B. durch an der Außenfläche 20d der Kappe 20 angeformte Dichtlippen ermöglicht sein. Die Kappe 20 kann Verstärkungen durch geeignete Einlegeteile in ihrem Körper aufweisen. Dies ist nicht gezeigt, aber leicht vorstellbar. Zudem kann eine Öffnung in dem Boden der Kappe 20 zur Montage der Kopfschraube 10 vorgesehen sein.

### Bezugszeichenliste

- 1: Bremsträger
- 2: Bremssattel
- 2a: Zuspannabschnitt
- 2b, 2c: Lagerabschnitt
- 3: Bremsscheibe
- 3a: Bremsscheibendrehachse
- 4: Festlager
- 4a: Festlagerachse
- 5: Loslager
- 5a: Loslagerachse
- 6, 6': Bremsbelag
- 7: Führungsbuchse
- 8: Kragen
- 9: Führungsholm
- 9a: Bohrung
- 9b: Endabschnitt
- 9c: Stirnfläche
- 9d: Kopfbohrung
- 9e: Nut
- 9f: Schulter
- 9g: Stufenbohrung
- 9h: Deckabschnitt
- 10: Kopfschraube
- 11: Innenhülse
- 11a: Schulter
- 12: Erster Rollbalg
- 12a, 12b, 12c: Balgabschnitt
- 12d: Verbindungsabschnitt
- 12e: Steg
- 12f: Taillierung
- 12g: Ringabschnitt
- 12h: Zwischenraum
- 13: Außenhülse
- 13a, 13b: Ende
- 14: Zweiter Rollbalg
- 14a: Verbindungsabschnitt
- 15: Anschlagring
- 15a: Vorsprung
- 15b: Nut
- 15c: Verbindungsabschnitt
- 16: Haltering
- 16a: Ringabschnitt
- 17: Wulst
- 18: Ringnut
- 19: Kopf
- 20: Kappe
- 20a: Kragen
- 20b: Deckabschnitt
- 20c: Nut
- 20d: Außenfläche
- 20e: Anlagefläche
- 21: Sattelbohrung
- 22: Dichtung
- 23: Rastnase
- 24: Rastausnehmung
- 25: Spiel
- 26, 26a: Freiraum
- F_{A}: Axialvorspannkraft
- F_{R}: Radialvorspannkraft
- SB: Scheibenbremse

## Patentansprüche

1. Scheibenbremse für ein Nutzfahrzeug, mit einem eine Bremsscheibe (3) umfassenden Bremssattel (2), der an einem ortsfesten Bremsträger (1) durch zwei Befestigungselemente, bezogen auf die Bremsscheibe (3), axial verschiebbar befestigt ist, wobei die Befestigungselemente jeweils einen mit dem Bremsträger (1) fest verbundenen Führungsholm (9) aufweisen, von denen zur axialen Verschiebbarkeit des Bremssattels (2) einer als Festlager (4) und der andere in einem als Loslager (5), welches eine Loslagerachse (5a) aufweist, ausgebildeten Gleitlager geführt ist, wobei zumindest das Loslager (5) eine den Führungsholm (9) umgreifende und verschiebegesichert in einer Sattelbohrung (21) des Bremssattels (2) gehaltene Führungsbuchse (7) aufweist, wobei zumindest an dem der Bremsscheibe (3) abgewandten Endbereich des Führungsholms (9) eine diesen gegenüber der Umgebung abdichtende erste schlauchförmige, längenveränderliche Dichtung angeordnet ist, die einerseits am Führungsholm (9) und andererseits in der Führungsbuchse (7) befestigt ist, wobei die erste schlauchförmige, längenveränderliche Dichtung mittels einer in den Führungsholm (9) eingepressten Kappe (20) am Führungsholm (9) geklemmt ist, wobei
die erste schlauchförmige, längenveränderliche Dichtung einen Ringabschnitt (12g) aufweist, welcher in einer umlaufenden Nut (9e) zwischen einem Deckabschnitt (9h), einem Kragen (20a) und einem Abschnitt einer umlaufenden Außenfläche (20d) eingesetzt ist, wobei der Ringabschnitt (12g) von dem Abschnitt der Außenfläche (20d) in Bezug auf die Loslagerachse (5a) radial nach innen gesichert gehalten ist, und wobei der Ringabschnitt (12g) von dem Deckabschnitt (9h) in Bezug auf die Loslagerachse (5a) radial nach außen gesichert gehalten ist,
wobei der Kragen (20a) an einem von der Bremsscheibe (3) abgewandten Ende der Kappe (20) angeformt ist, und wobei die Außenfläche (20d) eine umlaufende Außenfläche (20d) eines zylindrischen Körpers der Kappe (20) ist,
wobei eine umlaufende Nut (20c) als eine Ringnut zwischen einer Unterseite des Deckabschnitts (20b), einer Innenseite des Kragens (20a) und der Außenfläche (20d) gebildet ist, wobei der Deckabschnitt (20b) an dem äußeren radialen Ende des Kragens (20a) der Kappe (20) angebracht ist und sich axial parallel zu der Loslagerachse (5a) in Richtung auf die Bremsscheibe (3) erstreckt,
wobei der Ringabschnitt (12g) in der umlaufenden Nut (20c) axial direkt oder indirekt gegen den Führungsholm (9) vorgespannt ist,
**dadurch gekennzeichnet, dass** der Ringabschnitt (12g) axial mit einem umlaufenden Steg (12e) verbunden ist, welcher in Kontakt mit einer umlaufenden Stirnfläche (9c) des Führungsholms (9) steht.

2. Scheibenbremse nach Anspruch 1, **dadurch gekennzeichnet, dass** der Ringabschnitt (12g) die Außenfläche (20d) und den Deckabschnitt (9h, 20b) jeweils direkt und/oder indirekt berührt.

3. Scheibenbremse nach Anspruch 2, **dadurch gekennzeichnet, dass** der Ringabschnitt (12g) in der umlaufenden Nut (9e, 20c) zwischen dem Deckabschnitt (20b), dem Kragen (20a) und dem Abschnitt der Außenfläche (20d) radial vorgespannt gesichert gehalten ist.

4. Scheibenbremse nach einem der Ansprüche 1 bis 3, **dadurch gekennzeichnet, dass** der Ringabschnitt (12g) in der umlaufenden Nut (9e, 20c) gegenüber der Kappe (20) eine druckdichte Abdichtung bildet.

5. Scheibenbremse nach einem der Ansprüche 1 bis 4, **dadurch gekennzeichnet, dass** der Ringabschnitt (12g) der ersten schlauchförmigen, längenveränderlichen Dichtung einen kreisförmigen Querschnitt aufweist.

6. Scheibenbremse nach einem der Ansprüche 1 bis 5, **dadurch gekennzeichnet, dass** der Ringabschnitt (12g) in der umlaufenden Nut (20c) zwischen dem Deckabschnitt (20b), dem Kragen (20a) und dem Abschnitt der Außenfläche (20d) der Kappe (20) durch eine umlaufende Verpressung vorgespannt ist.

7. Scheibenbremse nach Anspruch 6, **dadurch gekennzeichnet, dass** der Ringabschnitt (12g) in der Nut (20c) der Kappe (20) von deren Kragen (20a) und dem Deckabschnitt (20b) in einem Winkelbereich von 160 bis 190° umhüllt ist, wobei die Außenfläche des Ringabschnitts (12g) zumindest mit der Außenfläche (20d) der Kappe (20) und mit der Innenseite des Deckabschnitts (20b) der Kappe (20) direkt oder indirekt in Kontakt steht.

8. Scheibenbremse nach einem der Ansprüche 1 bis 7, **dadurch gekennzeichnet, dass** eine Verbindung zwischen dem Steg (12e) und dem Ringabschnitt (12g) mit einer Taillierung (12f) versehen ist.

9. Scheibenbremse nach einem der Ansprüche 1 bis 8, **dadurch gekennzeichnet, dass** die erste schlauchförmige, längenveränderliche Dichtung über einen Verbindungsabschnitt (12d) an dem Ringabschnitt (12g) und an dem Steg (12e) angebracht ist, wobei der Verbindungsabschnitt (12d) eine Gelenkfunktion zwischen der schlauchförmigen, längenveränderlichen Dichtung und dem Ringabschnitt (12g) und dem Steg (12e) bildet.

10. Scheibenbremse nach einem der vorhergehenden Ansprüche, **dadurch gekennzeichnet, dass** die Führungsbuchse (7) eine elastische Innenhülse (11) aufweist.

11. Scheibenbremse nach Anspruch 10, **dadurch gekennzeichnet, dass** die erste schlauchförmige, längenveränderliche Dichtung mit der Innenhülse (11) verbunden ist.

12. Scheibenbremse nach Anspruch 10 oder 11, **dadurch gekennzeichnet, dass** die erste schlauchförmige, längenveränderliche Dichtung mit der Innenhülse (11) einstückig ausgebildet ist.

13. Scheibenbremse nach einem der vorhergehenden Ansprüche, **dadurch gekennzeichnet, dass** die erste schlauchförmige, längenveränderliche Dichtung als ein Rollbalg (12) ausgebildet ist.

14. Scheibenbremse nach einem der vorhergehenden Ansprüche, **dadurch gekennzeichnet, dass** an der der ersten schlauchförmigen, längenveränderlichen Dichtung gegenüberliegenden Seite der Führungsbuchse (7) eine zweite schlauchförmige, längenveränderliche Dichtung angeschlossen ist, die andererseits mit dem Führungsholm (9) verbunden ist.

15. Scheibenbremse nach Anspruch 14, **dadurch gekennzeichnet, dass** die zweite schlauchförmige, längenveränderliche Dichtung an einem Anschlagring (15) befestigt ist, der mit der Führungsbuchse (7) verbunden ist, vorzugsweise verrastet.

16. Scheibenbremse nach Anspruch 14 oder 15, **dadurch gekennzeichnet, dass** die zweite schlauchförmige, längenveränderliche Dichtung an ihrer dem Anschlagring (15) abgewandten Kante einen Wulst (17) aufweist, der in einer Ringnut (18) des Führungsholms (9) einliegt und durch einen im Bremssattel (2) befestigten Haltering (16) in der Ringnut (18) gehalten ist.

17. Scheibenbremse nach einem der Ansprüche 14 bis 16 **dadurch gekennzeichnet, dass** der Anschlagring (15) an seiner Außenfläche eine umlaufende Nut (15b) mit einer Dichtung (22) aufweist.

18. Scheibenbremse nach Anspruch 17, **dadurch gekennzeichnet, dass** die Dichtung (22) mindestens eine Doppeldichtlippe aufweist.

19. Scheibenbremse nach Anspruch 18, **dadurch gekennzeichnet, dass** die Dichtung (22) als mindestens eine Doppeldichtlippe an dem Anschlagring (15) in der Nut (15b) angeformt ist.

20. Scheibenbremse nach einem der Ansprüche 14 bis 19, **dadurch gekennzeichnet, dass** die zweite schlauchförmige, längenveränderliche Dichtung als ein zweiter Rollbalg (14) ausgebildet ist.

## Claims

1. A disk brake for a utility vehicle, having a brake calliper (2) that comprises a brake disk (3) and is fastened by two fastening elements to a positionally fixed brake carrier (1) so as to be axially displaceable in relation to the brake disk (3), the fastening elements each having a guide bar (9) that is permanently connected to the brake carrier (1), in order to ensure the axial displaceability of the brake calliper (2) one of these guide bars (9) being mounted as a fixed bearing (4) the other being mounted in a sliding bearing that takes the form of a floating bearing (5) has a floating bearing axis (5a), at least the floating bearing (5) having a guide bush (7) that encompasses the guide bar (9) and is held, secured against displacement, in a calliper bore (21) of the brake calliper (2), there being arranged at least at the end region of the guide bar (9) facing away from the brake disk (3) a first variable-length tubular seal that seals the guide bar (9) against the environment and is fastened on one hand on the guide bar (9) and on the other in the guide bush (7), this first variable-length tubular seal being clamped on the guide bar (9) by means of a cap (20) that is pressed into the guide bar (9),
the first variable-length tubular seal having a ring portion (12g) that is placed in a peripheral groove (9e) between a covering portion (9h), a collar (20a) and a portion of a peripheral outer surface (20d), this ring portion (12g) being held such that it is secured radially inwards in relation to the floating bearing axis (5a) by the portion of the outer surface (20d) and being held such that it is secured radially outwards in relation to the floating bearing axis (5a) by the covering portion (9h),
the collar (20a) being integrally formed on an end of the cap (20) facing away from the brake disk (3), and the outer surface (20d) being a peripheral outer surface (20d) of a cylindrical body of the cap (20),
a peripheral groove (20c) taking the form of an annular groove between an underside of the covering portion (20b), an inside of the collar (20a) and the outer surface (20d), the covering portion (20b) being attached to the outer radial end of the collar (20a) of the cap (20) and extending towards the brake disk (3) axially parallel to the floating bearing axis (5a),
the ring portion (12g) being pre-tensioned axially directly or indirectly against the guide bar (9) in the peripheral groove (20c), **characterised in that** the ring portion (12g) is connected axially to a peripheral web (12e) that is in contact with a peripheral end face (9c) of the guide bar (9).

2. A disk brake according to claim 1, **characterised in that** the ring portion (12g) touches the outer surface (20d) and the covering portion (9h, 20b) either directly and/or indirectly.

3. A disk brake according to claim 2, **characterised in that** the ring portion (12g) is held securely, radially pre-tensioned, in the peripheral groove (9e, 20c) between the covering portion (20b), the collar (20a) and the portion of the outer surface (20d).

4. A disk brake according to any one of claims 1 to 3, **characterised in that** the ring portion (12g) forms a pressure-resistant seal against the cap (20) in the peripheral groove (9e, 20c).

5. A disk brake according to any one of claims 1 to 4, **characterised in that** the ring portion (12g) of the first variable-length tubular seal has a circular cross section.

6. A disk brake according to any one of claims 1 to 5, **characterised in that** the ring portion (12g) is pre-tensioned by the application of peripheral pressure in the peripheral groove (9e) between the covering portion (20b), the collar (20a) and the portion of the outer surface (20d) of the cap (20).

7. A disk brake according to claim 6, **characterised in that** the ring portion (12g) is enclosed in an angular range of 160 to 190° in the groove (20c) of the cap (20) by the collar (20a) of the cap (20) and the covering portion (20b), the outer surface of the ring portion (12g) being in direct or indirect contact at least with the outer surface (20d) of the cap (20) and with the inside of the covering portion (20b) of the cap (20).

8. A disk brake according to any one of claims 1 to 7, **characterised in that** a connection between the web (12e) and the ring portion (12g) is provided with a waisted portion (12f).

9. A disk brake according to any one of claims 1 to 8, **characterised in that** the first variable-length tubular seal is attached by a connecting portion (12d) to the ring portion (12g) and to the web (12e), this connecting portion (12d) performing the function of a joint between the variable-length tubular seal and the ring portion (12g) and the web (12e).

10. A disk brake according to any one of the preceding claims, **characterised in that** the guide bush (7) has an elastic inner sleeve (11).

11. A disk brake according to claim 10, **characterised in that** the first variable-length tubular seal is connected to the inner sleeve (11).

12. A disk brake according to claim 10 or 11, **characterised in that** the first variable-length tubular seal is formed as one piece with the inner sleeve (11).

13. A disk brake according to any one of the preceding claims, **characterised in that** the first variable-length tubular seal is designed as a roller bellows (12).

14. A disk brake according to any one of the preceding claims, **characterised in that** connected to the side of the guide bush (7) opposite the first variable-length tubular seal is a second variable-length tubular seal, that is also connected to the guide bar (9).

15. A disk brake according to claim 14, **characterised in that** the second variable-length tubular seal is fastened to a stop ring (15) that is connected to, preferably locked to, the guide bush (7).

16. A disk brake according to claim 14 or 15, **characterised in that** the second variable-length tubular seal has on its edge facing away from the stop ring (15) a bead (17) that lies in an annular groove (18) of the guide bar (9) and is held in this annular groove (18) by a retaining ring (16) that is fastened in the brake calliper (2).

17. A disk brake according to any one of claims 14 to 16, **characterised in that** the outer surface of the stop ring (15) has a peripheral groove (15b) with a seal (22).

18. A disk brake according to claim 17, **characterised in that** the seal (22) has at least one double sealing lip.

19. A disk brake according to claim 18, **characterised in that** the seal (22) is integrally formed on the stop ring (15) in the groove (15b) as at least one double sealing lip.

20. A disk brake according to any one of claims 14 to 19, **characterised in that** the second variable-length tubular seal is designed as a second roller bellows (14).

## Revendications

1. Frein à disque d'un véhicule utilitaire, comprenant un étrier (2) de frein, qui enserre un disque (3) de frein et qui est fixé avec possibilité de coulisser axialement, rapporté au disque (3) de frein, à un flasque (1) de frein fixe en position par deux éléments de fixation, dans lequel les éléments de fixation ont chacun un longeron (9) de guidage relié fixement au flasque (1) de frein dont l'un pour la possibilité de coulisser axialement de l'étrier (2) de frein et sous la forme d'un palier (4) fixe et l'autre est guidé dans un palier lisse, constitué sous la forme d'un palier (5) libre, qui a un axe (5a) de palier libre, dans lequel au moins le palier (5) libre a un manchon (7) de guidage enserrant le longeron (9) de guidage et retenu à l'épreuve du coulissement dans un trou (21) de l'étrier (2) de frein, dans lequel au moins sur la partie d'extrémité, loin du disque (3) de frein, du longeron (9) de guidage est disposée une première étanchéité en forme de tube souple et se modifiant en longueur, qui rend le longeron (9) de guidage étanche par rapport à l'atmosphère ambiante, étanchéité qui est fixée d'une part au longeron (9) de guidage et d'autre part dans le manchon (7) de guidage, dans lequel la première étanchéité en forme de tube souple et se modifiant en longueur est serrée sur le longeron (9) de guidage au moyen d'une coiffe (20) pressée dans le longeron (9) de guidage, dans lequel
la première étanchéité en forme de tube souple et se modifiant en longueur a une partie (12g) annulaire, qui est insérée dans une rainure (9e) faisant le tour entre une partie (9h) de recouvrement, un collet (20a) et une partie d'une surface (20d) extérieure faisant le tour, la partie (12g) annulaire étant retenue de manière sécurisée vers l'intérieur radialement par rapport à l'axe (5a) du palier libre par la partie de la surface (20d) extérieure, et dans lequel la partie (12g) annulaire est maintenue de manière sécurisée vers l'extérieur radialement par rapport à l'axe (5a) du palier libre par la partie (9h) de recouvrement,
dans lequel le collet (20a) est formé sur une extrémité, loin du disque (3) de frein, de la coiffe (20) et dans lequel la surface (20d) extérieure est une surface (20d) extérieure faisant le tour d'un corps cylindre de la coiffe (20),
dans lequel une rainure (20c) faisant le tour est formée sous la forme d'une rainure annulaire entre une face inférieure de la partie (20b) de recouvrement, une face intérieure du collet (20a) et la surface (20d) extérieure, dans lequel la partie (20b) de recouvrement est mise sur l'extrémité radiale extérieurement du collet (20a) de la coiffe (20) et s'étend axialement, en étant parallèle à l'axe (5a) du palier libre, en direction du disque (3) de frein,
dans lequel la partie (12g) annulaire est, dans la rainure (20c) faisant le tour, précontrainte axialement directement ou indirectement sur le longeron (9) de guidage,
**caractérisé en ce que** la partie (12g) annulaire est reliée axialement à une nervure (12e) faisant le tour, qui est en contact avec une surface (9c) frontale faisant le tour du longeron (9) de guidage.

2. Frein à disque suivant la revendication 1, **caractérisé en ce que** la partie (12g) annulaire touche directement ou indirectement respectivement la surface (20d) extérieure et la partie (9h, 20b) de recouvrement

3. Frein à disque suivant la revendication 2, **caractérisé en ce que** la partie (12g) annulaire est maintenue d'une manière sécurisée, en étant précontrainte radialement dans la rainure (9e, 20c) faisant le tour, entre la partie (20b) de recouvrement, le collet (20a) et la partie de la surface (20d) annulaire.

4. Frein à disque suivant l'une des revendications 1 à 3, **caractérisé en ce que** la partie (12g) annulaire forme, dans la rainure (9e, 20c) faisant le tour, une étanchéité à l'épreuve de la pression contre la coiffe (20).

5. Frein à disque suivant l'une des revendications 1 à 4, **caractérisé en ce que** la partie (12g) annulaire de la première étanchéité en forme de tube souple et se modifiant en longueur a une section transversale de forme circulaire.

6. Frein à disque suivant l'une des revendications 1 à 5, **caractérisé en ce que** la partie (12g) annulaire est, dans la rainure faisant le tour (20c), précontrainte par une compression tout autour entre la partie (20b) de recouvrement, le collet (20a) et la partie de la surface (20d) extérieure de la coiffe (20).

7. Frein à disque suivant la revendication 6, **caractérisé en ce que** la partie (12g) annulaire est, dans la rainure (20c) de la coiffe (20), entourée, dans une partie angulaire de 160 à 190°, de son collet (20a) et de la partie (20b) de recouvrement, dans lequel la surface extérieure de la partie (12g) annulaire est en contact directement ou indirectement au moins avec la surface (20d) extérieure de la coiffe (20) et avec la face intérieure de la partie (20b) de recouvrement de la coiffe (20).

8. Frein à disque suivant l'une des revendications 1 à 7, **caractérisé en ce qu'**il est prévu une liaison entre les nervures (12e) et la partie (12g) annulaire avec une entaille (12f).

9. Frein à disque suivant l'une des revendications 1 à 8, **caractérisé en ce que** la première étanchéité en forme de tube souple et se modifiant en longueur est mise sur la partie (12g) annulaire et sur la nervure (12e) par une partie (12d) de liaison, dans lequel la partie (12d) de liaison forme une fonction articulée entre l'étanchéité en forme de tube souple et se modifiant en longueur et la partie (12g) annulaire et la nervure (12e).

10. Frein à disque suivant l'une des revendications précédentes, **caractérisé en ce que** le manchon (7) de guidage a une chemise (11) intérieure élastique.

11. Frein à disque suivant la revendication 10, **caractérisé en ce que** la première étanchéité en forme de tube souple et se modifiant en longueur est reliée à la chemise (11) intérieure.

12. Frein à disque suivant la revendication 10 ou 11, **caractérisé en ce que** la première étanchéité en forme de tube souple et se modifiant en longueur est constituée d'une seule pièce avec la chemise (11) intérieure.

13. Frein à disque suivant l'une des revendications précédentes, **caractérisé en ce que** la première étanchéité en forme de tube souple et se modifiant en longueur est constituée sous la forme d'un soufflet (12) roulant.

14. Frein à disque suivant l'une des revendications précédentes, **caractérisé en ce qu'**à la face, faisant face à la première étanchéité en forme de tube souple et se modifiant en longueur, du manchon (7) de guidage se raccorde une deuxième étanchéité en forme de tube souple et se modifiant en longueur, qui est reliée d'autre part au longeron (9) de guidage.

15. Frein à disque suivant la revendication 14, **caractérisé en ce que** la deuxième étanchéité en forme de tube souple et se modifiant en longueur est fixée à un anneau (15) de butée, qui est relié en étant de préférence encliqueté, au manchon (7) de guidage.

16. Frein à disque suivant la revendication 14 ou 15, **caractérisé en ce que** la deuxième étanchéité en forme de tube souple se modifiant en longueur a, sur son bord, loin de l'anneau (15) de butée, un bourrelet (17), qui est dans une rainure (18) annulaire du longeron (9) de guidage et qui est maintenu dans la rainure (18) annulaire par un anneau (16) de maintien fixé dans l'étrier (2) de frein.

17. Frein à disque suivant l'une des revendications 14 à 16, **caractérisé en ce que** l'anneau (15) de butée a, sur sa surface extérieure, une rainure (15b) faisant le tour et ayant une étanchéité (22).

18. Frein à disque suivant la revendication 17, **caractérisé en ce que** l'étanchéité (22) a au moins une double lèvre d'étanchéité.

19. Frein à disque suivant la revendication 18, **caractérisé en ce que** l'étanchéité (22) est formée dans la rainure (15b) sous la forme d'au moins une double lèvre d'étanchéité sur l'anneau (15) de butée.

20. Frein à disque suivant l'une des revendications 14 à 19, **caractérisé en ce que** la deuxième étanchéité en forme de tube souple est se modifiant en longueur est constituée sous la forme d'un deuxième soufflet (14) roulant.
